# EUROPÄISCHE PATENTSCHRIFT

(11) **EP 1 185 846 B1**
(45) Veröffentlichungstag und Bekanntmachung des Hinweises auf die Patenterteilung: **17.09.2003**
(21) Anmeldenummer: 00942063.9
(22) Anmeldetag: 14.06.2000
(51) Int. Cl.: G01M 1/04

(54) **AUSWUCHTVORRICHTUNG**
BALANCING DEVICE
DISPOSITIF D'EQUILIBRAGE

(30) Priorität: 15.06.1999 DE 19927307
(43) Veröffentlichungstag der Anmeldung: 13.03.2002
(73) Patentinhaber: Warkotsch, Horst, 30938 Burgwedel (DE)
(72) Erfinder: WARKOTSCH, Dirk, D-30938 Burgwedel (DE)
(74) Vertreter: Gesthuysen, von Rohr & Eggert
(86) Internationale Anmeldenummer: EP0005448
(87) Internationale Veröffentlichungsnummer: WO00077485

(56) Entgegenhaltungen:
- EP-A- 0 557 240
- US-A- 2 201 982
- US-A- 5 603 148

## Beschreibung

Die Erfindung betrifft eine Auswuchtvorrichtung nach dem Oberbegriff des Anspruchs 1. Die Erfindung betrifft weiterhin eine Auswucht- und Befüllstation mit einer Auswuchtvorrichtung der vorgenannten Art sowie eine Reifenfenwechselvorrichtung mit einer Abdrückereinrichtung, einer Reifenwechseleinrichtung und einer Auswucht- und Befüllstation der zuvor genannten Art.

Eine Auswuchtvorrichtung der zuvor genannten Art geht bereits aus der EP 0 557 240 B 1 hervor. Die bekannte Auswuchtvorrichtung hat gegenüber solchen Vorrichtungen, bei denen die Auswuchtmaschine nicht verschwenkbar und nur in horizontaler Lage angeordnet ist, den Vorteil, daß Zentrierfehler beim Aufspannen des Rades auf die Welle der Auswuchtmaschine nicht auftreten können.

In der Praxis hat die bekannte Auswuchtvorrichtung allerdings verschiedene Nachteile, die daraus resultieren, daß die Welle der Auswuchtmaschine mit ihrem oberen Ende in der vertikal ausgerichteten Zentrierstellung relativ weit über die Auflage des Traggestells übersteht. Um ein Rad auf die in die Zentrierstellung geschwenkte Auswuchtmaschine aufspannen zu können, muß der jeweilige Monteur das Rad relativ weit hochheben, was insbesondere bei kleinen Monteuren und schweren Felgen umständlich und schwer zu bewältigen ist.

Auswuchtvorrichtungen der vorgenannten Art können im übrigen Teil einer Auswucht- und Befüllstation sowie einer Reifenwechselvorrichtung sein. Eine aus der Praxis bekannte Reifenwechselvorrichtung weist folgende nacheinander angeordnete Funktionseinheiten auf:
1. einen Radelevator,
2. einen Versorgungstisch für mehrere Räder,
3. einen Abdrücker mit Rotationstischplatte,
4. ein Reifenwechselgerät,
5. eine Befüllstation mit Befülltisch,
6. ein Radwendesystem,
7. einen Radheber und
8. eine Auswuchtvorrichtung.

Der Reifenwechsel erfolgt bei der bekannten Reifenwechselvorrichtung derart, daß ein Monteur das Kraftfahrzeug zunächst an den Arbeitsbereich fährt, das Fahrzeug dort hochhebt, die Räder vom Wagen entfernt und diese dem Radelevator zuführt, der die Räder automatisch auf den Versorgungstisch hebt. Durch eine Neigung und entsprechende Laufrollen am Versorgungstisch rollen die Räder den Versorgungstisch entlang. Ein weiterer Monteur wechselt den Reifen, nachdem er die Felgenkante am Abdrücker gelöst hat. Das Rad wird hierzu einfach vom Versorgungstisch zum Abdrücker gerollt und anschließend zur Reifenwechselmaschine gekippt. Anschließend wird das Rad der Befüllstation zugeführt und mit einem vorgegebenen Überdruck versehen. Sodann wird der Reifen auf den korrekten Enddruck entlüftet. Nach dem Befüllen wird das Rad von einem weiteren Monteur vom Befülltisch genommen, wozu es von einem Radwendesystem im Anschluß an den Befülltisch auf den Radheber gekippt wird. Hier wird das Rad angehoben, damit es auf die in Richtung auf die Befüllstation weisende Welle der Auswuchtmaschine der Auswuchtvorrichtung aufgespannt werden kann, wo dann das Auswuchten stattfindet.

Die vorgenannte Reifenwechselvorrichtung mit einer Vielzahl von Einzelgeräten ist relativ aufwendig und nimmt vor allem sehr viel Platz in Anspruch. Für kleinere Werkstätten ist die bekannte Reifenwechelvorrichtung nicht geeignet.

Aufgabe der vorliegenden Erfindung ist es nun, eine Auswuchtvorrichtung der eingangs genannten Art zur Verfügung zu stellen, bei der die Handhabung beim Aufspannen eines Rades erleichtert ist. Wird die Auswuchtvorrichtung in Verbindung mit einer Auswucht- und Befüllstation oder einer Reifenwechselvorrichtung eingesetzt, besteht die Aufgabe der Erfindung auch darin, eine möglichst einfach aufgebaute und kleinbauende Auswucht- und Befüllstation bzw. Reifenwechselvorrichtung zur Verfügung zu stellen.

Die zuvor genannten Aufgaben werden bei einer Auswuchtvorrichtung der eingangs genannten Art erfindungsgemäß im wesentlichen dadurch gelöst, daß der Auswuchtmaschine eine Höhenverstelleinrichtung zugeordnet ist, um die Auswuchtmaschine aus der Zentrierstellung so weit in das Traggestell abzusenken, daß das äußere Ende der Welle nicht über die Auflage übersteht. Die erfindungsgemäß vorgesehene Absenkbarkeit der Auswuchtmaschine bietet eine Reihe von wesentlichen Vorteilen. Zunächst einmal ermöglicht es die vollständige Versenkbarkeit der Auswuchtmaschine, ein Rad auf der Auflage bzw. dem Tisch der Auswuchtvorrichtung abzulegen und auf diesem dann bedarfsweise zu verschieben, so daß die mittige Öffnung des Rades bzw. der Felge mit der Welle der Auswuchtmaschine ausgefluchtet ist. Zu diesem Zweck können entsprechende Zentriermittel oder -hilfen an der Auflage vorgesehen sein. Nach entsprechender Anordnung des Rades auf der Auflage der Auswuchtvorrichtung kann die Auswuchtmaschine dann aus ihrer ver- bzw. abgesenkten Stellung nach oben fahren, wobei die Welle durch die Felgenöffnung hindurch fährt und das Rad anschließend angehoben wird. Ein manuelles Anheben des Rades bis in die Zentrierstellung der Auswuchtmaschine ist jedenfalls nicht mehr erforderlich.

Die erfindungsgemäße Ausgestaltung bietet darüber hinaus den wesentlichen Vorteil, daß es möglich ist, die Auswuchtvorrichtung in eine kombinierte Auswucht- und Befüllstation zu integrieren. Diese Station weist neben der Auswuchtvorrichtung der zuvor genannten Art eine Luftdruckversorgungseinrichtung und einen Befülltisch auf, wobei die Auflage den Befülltisch bildet oder der Befülltisch in die Auflage übergeht. Die erfindungsgemäße Station kombiniert zwei Einzelgeräte des Standes der Technik, nämlich die Befüllstation und die Auswuchtvorrichtung, während ein Radwendesystem und ein Radheber nicht mehr erforderlich sind, da das Befüllen und Auswuchten an einer einzigen Station stattfindet. Somit verringert sich auch der Platzbedarf der erfindungsgemäßen Auswucht- und Befüllstation und einer mit einer solchen Station versehenen Reifenwechselvorrichtung erheblich.

Ein Reifenwechsel an einem Rad erfolgt bei der Erfindung derart, daß nach dem Wechsel des alten Reifens durch einen neuen das Rad der Auswucht- und Befüllstation zugeführt wird, wobei das Rad mit der nach unten geöffneten Felgenschüssel auf den Befülltisch der Auswucht- und Befüllstation gelegt wird. Der Reifen wird dann mit Luft bei einem vorgegebenen Druck gefüllt. Anschließend wird das Rad auf dem Befülltisch auf der Welle der Auswuchtmaschine der Auswucht- und Befüllstation verspannt. Hierzu wird die Welle mit der Auswuchtmaschine aus der Auswucht- und Befüllstation nach oben in die Zentrierstellung bewegt wird. Anschließend wird die Auswuchtmaschine mit dem auf der Welle verspannten Rad um 90° in die horizontale Meßstellung zur Durchfiihrung des Unwuchtmeßlaufes verschwenkt. Erkennbar unterscheidet sich die erfindungsgemäße Art der Befüllung und des Auswuchtens eines Rades erheblich vom aus dem Stand der Technik bekannten Verfahren.

Bevorzugt weist die erfindungsgemäße Auswuchtvorrichtung zur Höhenverstellung wenigstens einen an einer Führung geführten Schlitten auf, gegenüber dem die Auswuchtmaschine schwenkbar gelagert ist, um eine Verschwenkung von der Zentrierstellung in die Meßstellung und umgekehrt ermöglichen zu können. Um eine gleichmäßige Höhenverstellung zu erzielen, kann auch vorgesehen sein, daß die Höhenverstelleinrichtung auf gegenüberliegenden Seiten jeweils eine Führung mit einem Schlitten aufweist, wobei die Auswuchtmaschine zwischen den Schlitten angeordnet ist. Bevorzugt sind die Schlitten über eine Traverse miteinander verbunden, an der die Auswuchtmaschine schwenkbar gelagert ist. Die Höhenverstellung der Auswuchtmaschine kann dabei grundsätzlich über elektrische, pneumatische oder hydraulische Verstellantriebe, wie Elektromotoren sowie pneumatische oder hydraulische Zylinder erfolgen.

Um eine definierte Bewegung beim Verschwenken der Auswuchtmaschine und eine Begrenzung des Schwenkweges zu erzielen, ist bei einer bevorzugten Ausführungsform der Erfindung vorgesehen, daß die Verschwenkung mit Hilfe einer Kurvenscheibe und eines auf die Kurvenscheibe wirkenden, federbelasteten Lagerbolzens vorgenommen wird. Dabei sind in der Kurvenscheibe Vertiefungen in den Endstellungen zum Eingreifen des Lagerbolzens vorgesehen. Außerdem sind Endanschläge vorgesehen, die ein Verschwenken wesentlich über die jeweilige Endstellung hinaus verhindern.

Des weiteren sind bei einer bevorzugten Ausführungsform der Erfindung Abbremsmittel zur Verzögerung der Schwenkbewegung vorgesehen, die der schwenkbaren Auswuchtmaschine zugeordnet sind. Bei den Abbremsmitteln kann es sich um in entgegengesetzten Richtungen wirkende Zylinder handeln.

Bei einer besonders bevorzugten Ausgestaltung der vorliegenden Erfindung weist die Höhenverstelleinrichtung ein im Trägergestell schwenkbar gelagertes Hebelgetriebe auf, das einerseits mit der Auswuchtmaschine und andererseits mit dem Verstellantrieb verbunden ist. Das Hebelgetriebe ist dabei derart ausgebildet, daß es bei Betätigung über den Verstellantrieb sowohl für die Hub- als auch für die Schwenkbewegung der Auswuchtmaschine verantwortlich ist. Im einzelnen ist hierzu ein besonderer Winkelhebel und wenigstens ein mit dem Winkelhebel verbundener weiterer Hebel vorgesehen.

Vorzugsweise ist die Auswuchtmaschine in der Zentrierstellung und/oder der Meßstellung arretierbar. Bei der Arretierung kann es sich um eine leicht lösbare Verrastung oder aber auch um eine formschlüssige Verriegelung handeln. Die Verschwenkung der Auswuchtmaschine in die einzelnen Stellungen kann in der zuvor beschriebenen Art und Weise mit Hilfe einer Kurvenscheibe durchgeführt werden. Auch die Realisierung von entsprechenden Endanschlägen ist ohne weiteres möglich.

Im übrigen kann die Auswuchtvorrichtung ein Gehäuse bzw. ein Traggestell (Unterbau) aufweisen. Bei dieser Vorrichtung handelt es sich dann um ein Standgerät, wie dies im Stand der Technik üblich ist.

Nachfolgend werden bevorzugte Ausführungsbeispiele der Erfindung näher beschrieben. Es zeigt
- Fig. 1: eine perspektivische Ansicht eines Teils einer erfindungsgemäßen Auswuchtvorrichtung mit abgesenkter Auswuchtmaschine,
- Fig. 2: eine der Fig. 1 entsprechende Ansicht der erfindungsgemäßen Auswuchtvorrichtung mit sich in Zentrierstellung befindender Auswuchtmaschine,
- Fig. 3: eine der Fig. 1 entsprechende Ansicht der erfindungsgemäßen Auswuchtvorrichtung mit sich in Meßstellung befindender Auswuchtmaschine,
- Fig. 4: eine der Fig. 1 entsprechende Ansicht einer anderen Ausführungsform einer erfindungsgemäßen Auswuchtvorrichtung mit abgesenkter Auswuchtmaschine,
- Fig. 5: eine der Fig. 4 entsprechende Ansicht der Auswuchtvorrichtung mit sich in Zentrierstellung befindender Auswuchtmaschine,
- Fig. 6: eine der Fig. 4 entsprechende Ansicht mit sich in Meßstellung befindender Auswuchtmaschine,
- Fig. 7: eine Draufsicht auf eine Kurvenscheibe der erfindungsgemäßen Auswuchtvorrichtung,
- Fig. 8 bis 12: verschiedene schematische Darstellungen des Bewegungsablaufs der Hub- und Schwenkbewegung bei einer anderen Ausführungsform der erfindungsgemäßen Auswuchtvorrichtung, und
- Fig. 13 und 14: Draufsichten auf eine schematisch dargestellte erfindungsgemäße Reifenwechselvorrichtung.

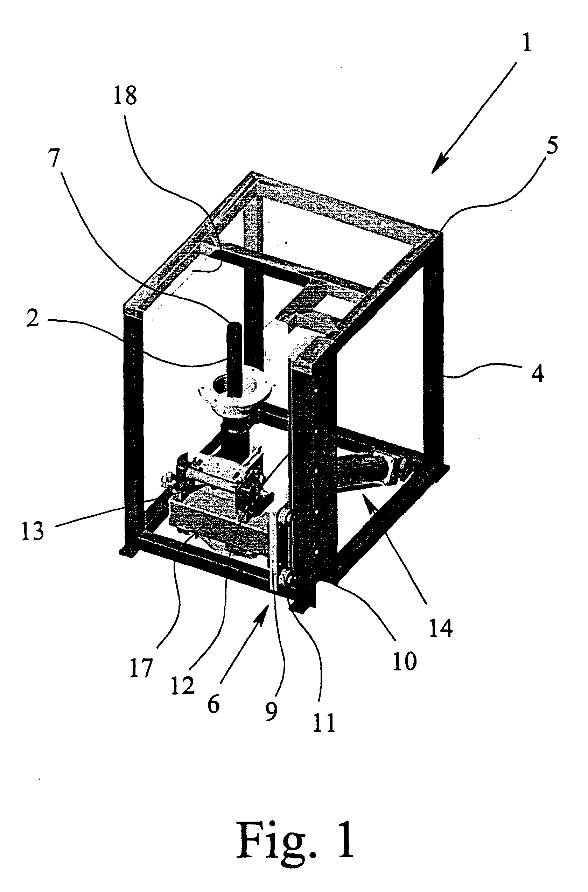

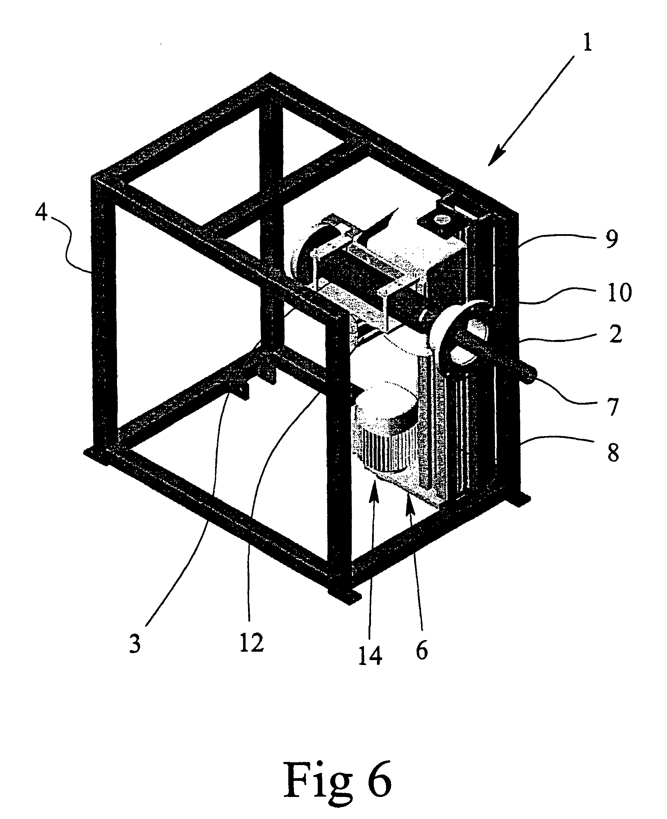

In den Fig. 1 bis 6 sind zwei unterschiedliche Ausführungsformen einer Auswuchtvorrichtung 1 dargestellt, die mit einer eine Welle 2 zum Aufspannen eines nicht dargestellten Rades aufweisenden Auswuchtmaschine 3 versehen ist. Die Auswuchtvorrichtung 1 weist vorliegend ein Traggestell 4 und eine Auflage 5 oberhalb des Traggestells 4 auf. Es ist darauf hinzuweisen, daß der Begriff "Traggestell" sehr weit zu verstehen ist. Es handelt sich hierbei letztlich um einen Unterbau bzw. ein Gehäuse der Auswuchtvorrichtung 1, in den bzw. in das die Auswuchtmaschine 3 versenkbar ist. Bei dem Traggestell 4 handelt es sich vorliegend um eine Rahmenkonstruktion aus Profilstäben, die miteinander fest verbunden sind. An den einzelnen Seiten befinden sich im fertig montierten Zustand der Auswuchtvorrichtung 1 Abdeckungen.

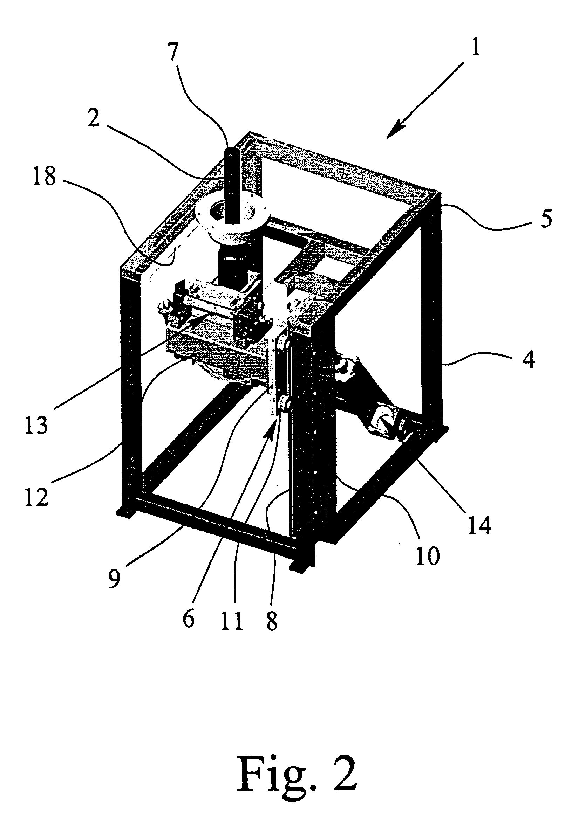

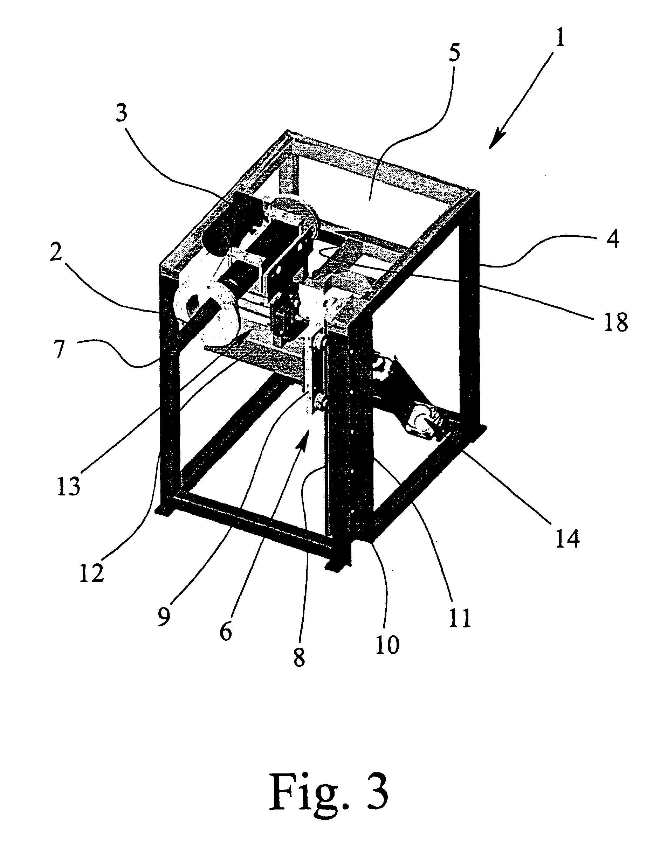

Wie sich aus einem Vergleich der Fig. 2 und 3 einerseits und 5 und 6 andererseits ergibt, ist die Auswuchtmaschine 3 relativ zum Traggestell 4 aus einer horizontalen Stellung, die nachfolgend als Meßstellung bezeichnet wird, um 90° in eine obere Stellung, die nachfolgend als Zentrierstellung bezeichnet wird, verschwenkbar.

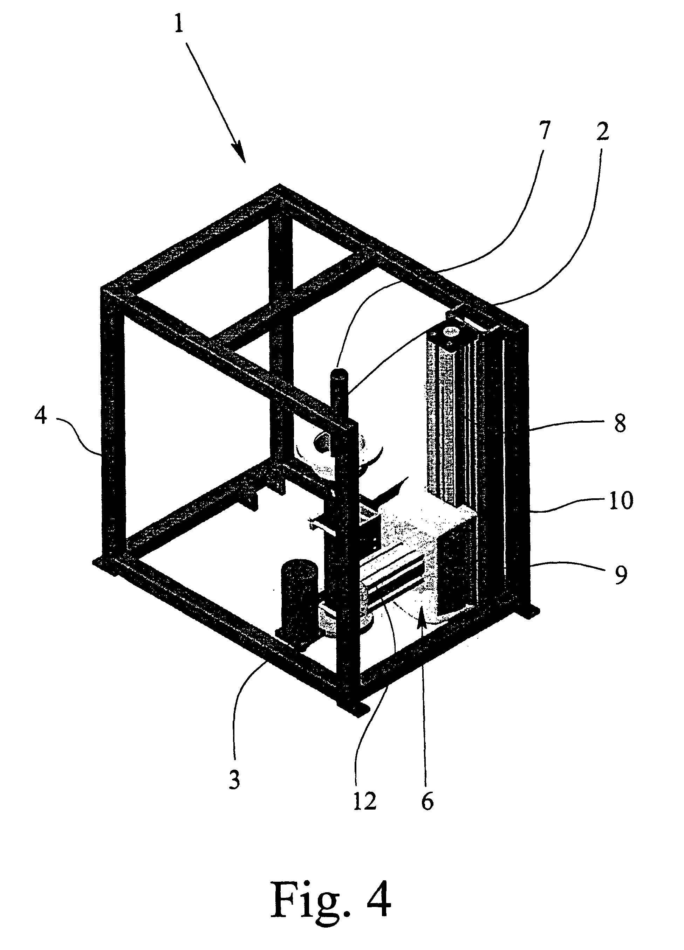

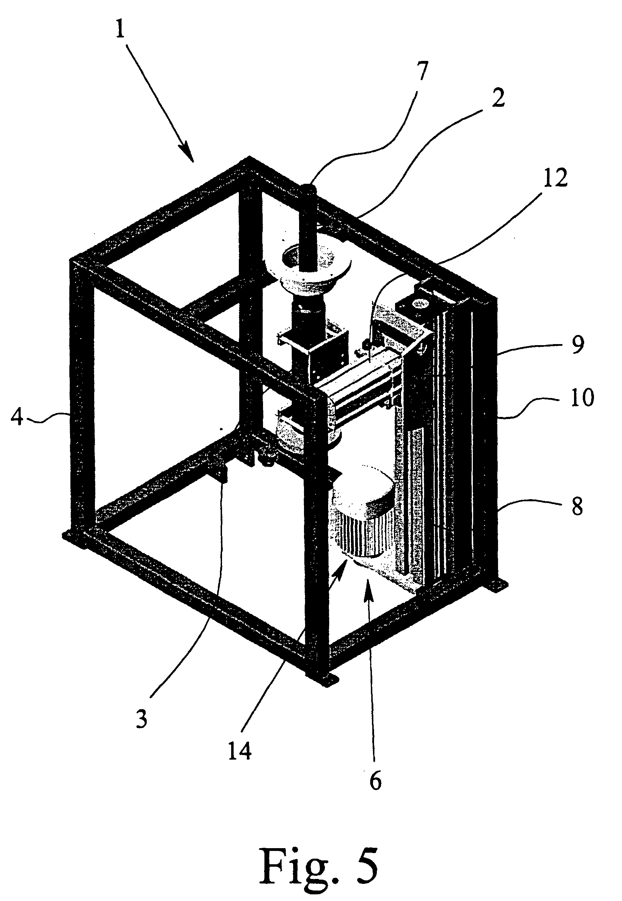

Wesentlich ist nun, daß der Auswuchtmaschine 3 eine Höhenverstelleinrichtung 6 zugeordnet ist, um die Auswuchtmaschine 3 von der Zentrierstellung, die in den Fig. 2 und 5 dargestellt ist, so weit in das Traggestell 4 abzusenken, daß das äußere Ende 7 der Welle 2 nicht über die Auflage 5 übersteht. Der abgesenkte bzw. versenkte Zustand bei vertikal ausgerichteter Auswuchtmaschine 3 ist in den Fig. 1 und 4 dargestellt. Aufgrund der vollständigen Versenkung der Auswuchtmaschine 3 einschließlich der Welle 2 in dem Traggestell 4 ist es möglich, ein auf die Auflage 5 aufgelegtes Rad in horizontaler Richtung beliebig zu verschieben.

Die Höhenverstelleinrichtung 6 weist bei den dargestellten Ausführungsbeispielen einen an einer Führung 8 geführten Schlitten 9 auf, gegenüber dem die Auswuchtmaschine 3 schwenkbar gelagert ist. Bei der Führung 8 handelt es sich um eine an den Streben 10 des Traggestells 4 befestigte, vertikal verlaufende Schiene, wobei der Schlitten 9 über Rollen 11 geführt ist, die an den Längsseiten der schienenartigen Führung 8 laufen. Am Schlitten 9 befestigt ist eine Traverse 12, an der wiederum die Auswuchtmaschine 3 über eine Schwenklagerung 13 befestigt ist.

Im übrigen versteht es sich, daß es grundsätzlich natürlich auch möglich ist, jeweils eine Führung auf gegenüberliegenden Seiten am Traggestell vorzusehen. In diesem Falle sind dann zwei Schlitten vorhanden, die jeweils mit der Traverse verbunden sind.

Die beiden Ausführungsformen gemäß den Fig. 1 bis 3 einerseits und 4 bis 6 andererseits unterscheiden sich dahingehend, daß bei der Ausführungsform gemäß den Fig. 1 bis 3 die Höhenverstelleinrichtung 6 einen pneumatischen Verstellantrieb 14 in Form eines Pneumatikzylinders aufweist, der mit dem Schlitten 9 bzw. der Traverse 12 verbunden ist. Bei der in den Fig. 4 bis 6 dargestellten Ausführungsform ist ein elektrischer Verstellantrieb 14 vorgesehen, der über ein mechanisches Übertragungsmittel mit dem Schlitten 9 verbunden ist. Die Art des Übertragungsmittels zwischen dem elektrischen Verstellantrieb 14 und dem Schlitten 9 ist beliebig.

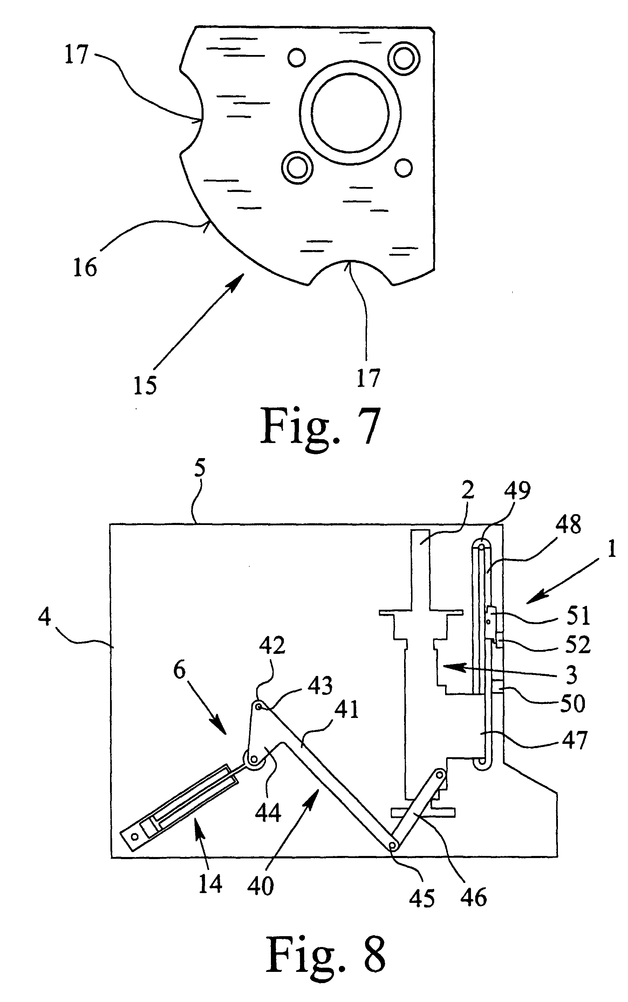

Die Schwenklagerung 13 weist wenigstens eine Kurvenscheibe 15 auf, wie sie in Fig. 7 dargestellt ist. Mit der Kurvenscheibe 15 wirkt ein nicht dargestellter federbelasteter Lagerbolzen zusammen, der beim Verschwenken der Auswuchtmaschine 3 auf der Kurve 16 der Kurvenscheibe 15 entlangläuft. Die Kurvenscheibe 15 ist vorzugsweise ortsfest an der Traverse 12 befestigt, während der federbelastete Lagerbolzen an der Auswuchtmaschine 3 befestigt ist. An der Kurvenscheibe 15 befinden sich auf der Kurve 16 Vertiefungen 17, die um 90° voneinander beabstandet sind. Die Vertiefungen 17 dienen zur Verrastung in den jeweiligen Endstellungen, d. h. in der Zentrierstellung bzw. in der Meßstellung. Die Vertiefungen 17 dienen vorliegend nicht als Endanschläge, was jedoch ohne weiteres möglich wäre. Derartige Endanschläge sind zwischen der Auswuchtmaschine 3 und der Traverse 12 bzw. dem Traggestell 4 vorgesehen, jedoch nicht dargestellt. Im übrigen versteht sich natürlich, daß in der Auflage 5 eine Öffnung 18, wie sie in den Fig. 1 bis 3 und 8 und 9 dargestellt ist, vorhanden sein muß, um die Auswuchtmaschine 3 aus ihrer versenkten Stellung heraus in die Zentrierstellung bewegen und aus der Zentrierstellung in die Meßstellung verschwenken zu können.

In den Fig. 8 bis 12 ist eine andere Ausführungsform der Verstellmechanik der Höhenverstelleinrichtung 6 dargestellt. Die Höhenverstelleinrichtung 6 weist hierbei ein Hebelgetriebe 40 auf, das einerseits mit dem Verstellantrieb 14 und andererseits mit der Auswuchtmaschine 3 verbunden ist. Das Kennzeichen des Hebelgetriebes 40 besteht darin, daß sowohl die Hubbewegung der Auswuchtmaschine 3 als auch die Schwenkbewegung der Auswuchtmaschine 3 über das Hebelgetriebe 40 erfolgt. Die Verwendung des Hebelgetriebes 40 ermöglicht es im übrigen, beide Bewegungen mit nur einem einzigen Verstellantrieb 14, also beispielsweise mit nur einem einzigen hydraulischen Zylinder auszuführen, was zu einem erheblichen Einsparpotential führt.

Das Hebelgetriebe 40 weist vorliegend einen Winkelhebel 41 auf, der an seinem einen Ende 42 an einem Schwenkbolzen 43 am Traggestell 4 gelagert ist. Von dem Ende 42 abgewinkelt ist ein Schenkel 44. Im dargestellten Ausführungsbeispiel ist der Schenkel 44 um etwa 45° vom Hauptschenkel des Winkelhebels 41 abgewinkelt. Endseitig ist der Schenkel 44 mit dem Verstellantrieb 14 verbunden. An seinem anderen Ende 45 ist der Winkelhebel 41 mit einem weiteren Hebel 46 gelenkig verbunden, der endseitig wiederum mit der Auswuchtmaschine 3 gelenkig verbunden ist. Die Auswuchtmaschine 3 selbst greift mit einem Führungsabschnitt 47 in eine schwenkbare Führungsschiene 48 ein. Die Führungsschiene 48 ist an ihrem oberen Ende 49 schwenkbar gelagert.

Bei dem in Fig. 8 dargestellten Zustand bei vollständig abgesenkter Auswuchtmaschine 3 befindet sich die Führungsschiene 48 in senkrechter Stellung. Sie liegt dabei an einem am Traggestell 4 vorgesehenen Anschlag 50 an. An der Führungsschiene 48 befindet sich eine Sperrklinke 51, die, worauf später noch näher eingegangen wird, ein "Zurückrutschen" der Auswuchtmaschine 3 verhindert. Die Sperrklinke 51 ist federbeaufschlagt und wirkt im in Fig. 8 dargestellten Zustand mit einem weiteren Anschlag 52 derart zusammen, daß der Führungsschlitz in der Führungsschiene 48 freigegeben ist, so daß sich der Führungsabschnitt 47 ohne weiteres entlang des Führungsschlitzes in der Führungsschiene 48 bewegen kann.

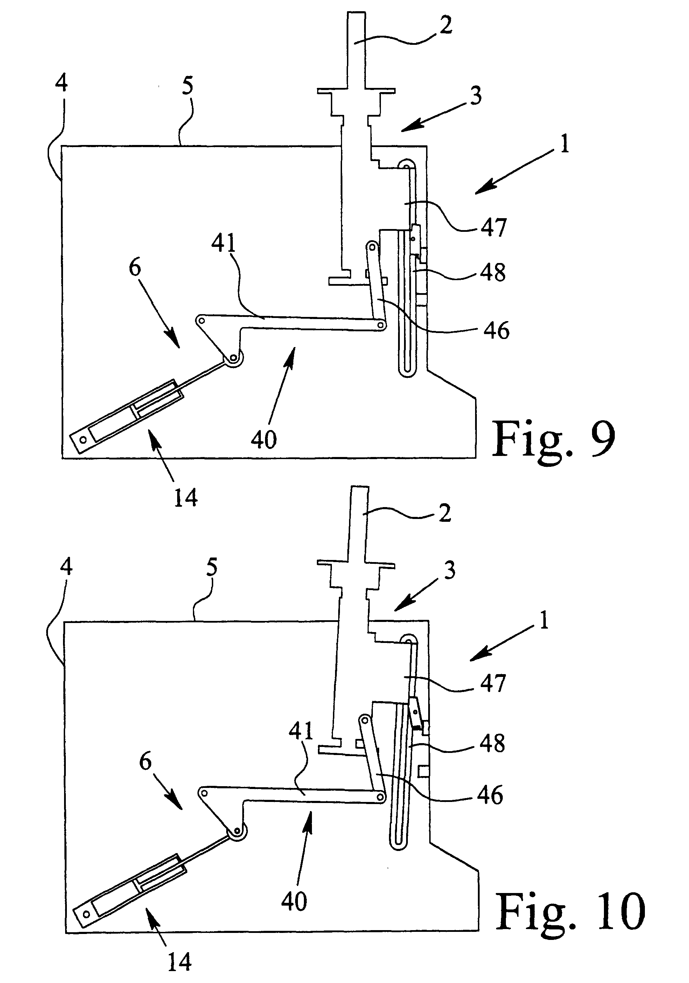

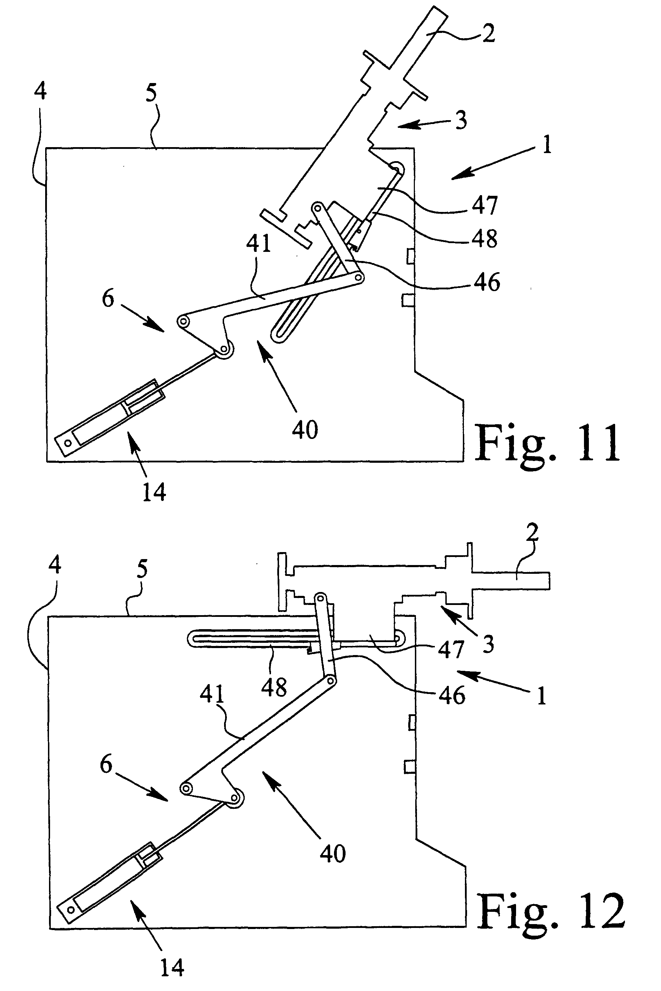

Zur Durchführung der Hubbewegung der Auswuchtmaschine 3 wird ausgehend vom Zustand gemäß Fig. 8 der Verstellantrieb 14 betätigt. Der Winkelhebel 41 schwenkt dann aus der in Fig. 8 dargestellten, abgesenkten Stellung um den Schwenkbolzen 43 etwa in die horizontale Stellung, die in Fig. 9 dargestellt ist. Aufgrund der gelenkigen Verbindung mit dem Hebel 46 wird dabei die Auswuchtmaschine 3 über den in die Führungsschiene 48 eingreifenden Führungsabschnitt 47 bis an das obere Ende 49 der Führungsschiene 48 verschoben. In Fig. 9 ist der maximal angehobene Zustand der Auswuchtmaschine 3 dargestellt. In diesem Zustand liegt die Führungsschiene 48 noch an dem Anschlag 50 an, während die Sperrklinke 51 noch mit dem weiteren Anschlag 52 zusammenwirkt. Bei weiterer Verschwenkung des Winkelhebels 41 gegen den Uhrzeigersinn beginnt die Führungsschiene 48 um den Schwenkpunkt an ihrem oberen Ende 49 zu schwenken und zwar im Uhrzeigersinn. Dies führt dazu, daß sich die Führungsschiene 48 vom Anschlag 50 weg bewegt. Gleichzeitig kommt die Sperrklinke 51 außer Eingriff mit dem weiteren Anschlag 52. Die federbelastete Sperrklinke 51 greift dabei mit einem entsprechenden Sperrabschnitt in den Führungsschlitz der Führungsschiene 48 ein und fixiert die Auswuchtmaschine in der oberen Stellung in der Führungsschiene 48. Dieser Zustand ist in Fig. 10 dargestellt. Die weitere Betätigung des Verstellantriebes 14 führt zur Verschwenkung der Auswuchtmaschine 3 von einer Zwischenstellung bis in die Meßstellung, wie dies die Fig. 11 und 12 verdeutlichen. Ein Rückschwenken der Auswuchtmaschine 3 aus der in Fig. 12 dargestellten Meßstellung zurück in die in Fig. 8 dargestellte abgesenkte Stellung erfolgt in gleicher Weise, wie dies zuvor beschrieben worden ist, lediglich in umgekehrter Reihenfolge.

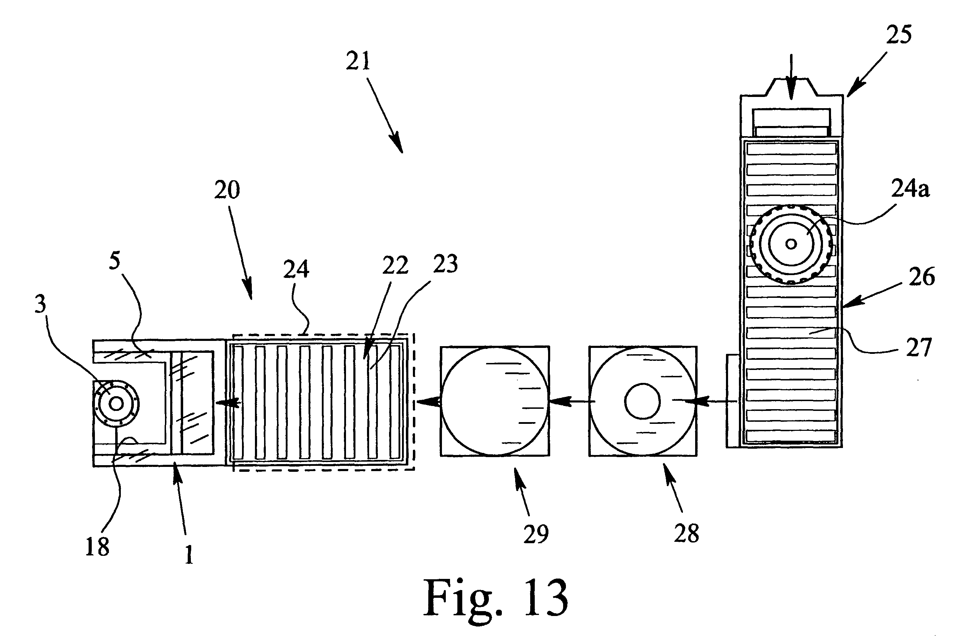

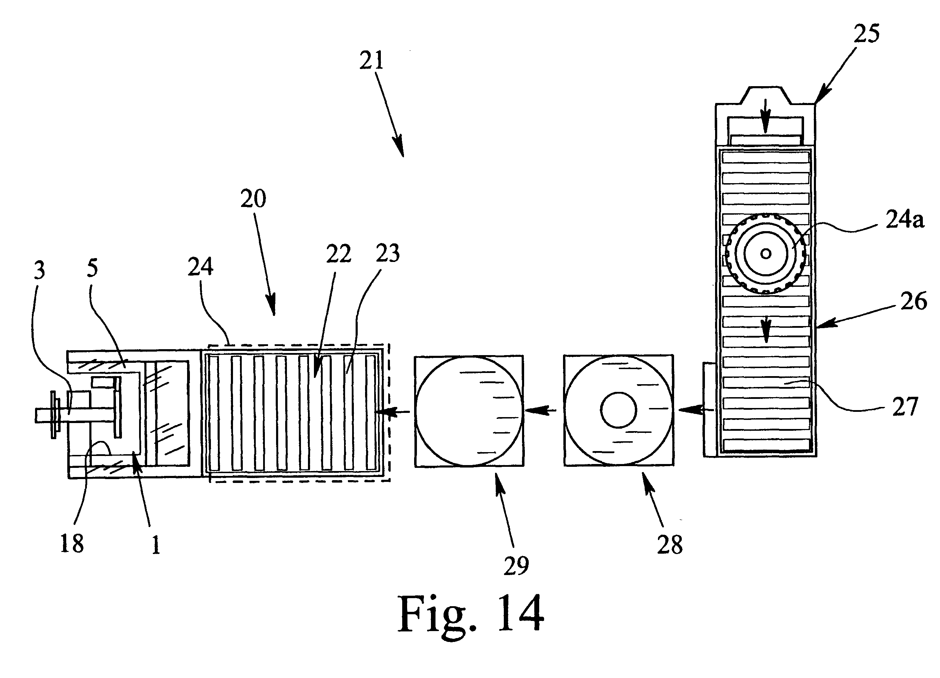

In den Fig. 13 und 14 ist eine erfindungsgemäße Auswucht- und Befüllstation 20 dargestellt, die Teil einer erfindungsgemäßen Reifenwechselvorrichtung 21 ist. Die Auswucht- und Befüllstation 21 weist eine Auswuchtvorrichtung 1 der vorgenannten Art auf. Weiterhin ist die Auswucht- und Befüllstation mit einer nicht dargestellten Luftversorgungseinrichtung und einem Befülltisch 22 versehen. Der Befülltisch 22 weist eine Mehrzahl von Laufrollen 23 auf. Im übrigen ist oberhalb des Befülltisches 22 ein auf den Befülltisch 22 aufgesetzter Sicherheitskäfig 24 vorgesehen. Der Befülltisch 22 geht unmittelbar in die Auflage 5, die ebenfalls Laufrollen aufweisen kann, über. Im übrigen wird der Unterbau des Befülltisches 22 vom Traggestell 4 der Auswuchtvorrichtung 1 gebildet. Durch das unmittelbare Ineinanderübergehen des Befülltisches 22 in die Auflage 5 ist es ohne weiteres möglich, ein Rad 24a, wie es in den Fig. 13 und 14 dargestellt ist, vom Befülltisch 22 auf die Auflage 5 zu verschieben, ohne das Rad hochzuheben.

Grundsätzlich ist es im übrigen auch möglich, die Auswuchtmaschine unmittelbar unterhalb des Befülltisches anzuordnen, so daß das Verspannen des Rades auf der Welle direkt nach dem Befüllen erfolgen kann, ohne daß ein Verschieben des Rades erforderlich wäre.

In Fig. 13 ist die Auswucht- und Befüllstation 20 in einer Stellung gezeigt, bei der sich die Auswuchtmaschine 3 in der abgesenkten oder der Zentrierstellung befindet. Bei der Darstellung gemäß Fig. 14 befindet sich die Auswuchtmaschine 3 in der horizontalen Meßstellung.

Im übrigen zeigen die Fig. 13 und 14 die Reifenwechselvorrichtung 21 mit ihren Einzelkomponenten. Hierbei handelt es sich in Bearbeitungsrichtung entsprechend den dargestellten Pfeilen um einen Radelevator 25, an den sich ein Versorgungstisch 26 mit Laufrollen 27 anschließt. An den Versorgungstisch 26 schließt sich eine Abdrückeinrichtung 28 sowie eine Reifenwechseleinrichtung 29 an. Schließlich ist die zuvor bereits beschriebene Auswucht- und Befüllstation 20 vorgesehen.

Ein Reifenwechsel bei einem Rad 24a erfolgt nun derart, daß das Rad 24a über den Radelevator 25 und den Versorgungstisch 26 zunächst der Abdrückeinrichtung 28 zugeführt wird, an der die Felgenkante gelöst wird. An der Reifenwechseleinrichtung 29 wird ein neuer Reifen aufgezogen, während nach Übergabe des mit dem neuen Reifen versehenen Rades auf den Befülltisch 22 der Auswucht- und Befüllstation 20 der neue Reifen mit Luft bei einem vorgegebenen Überdruck gefüllt wird. Anschließend wird dieser Überdruck auf den gewünschten Enddruck entlüftet. Durch Verschieben des Rades vom Befülltisch 22 auf die Auflage 5 wird das Rad unmittelbar der Auswuchtvorrichtung 1 zugeführt, ohne daß ein Wenden des Rades oder ein erneutes Anheben erforderlich wäre. In diesem Zustand liegt das Rad mit seiner Felgenschüssel nach unten geöffnet auf der Auflage 5 auf. Anschließend wird die Auswuchtmaschine 3 aus der versenkten Stellung herausbewegt, wobei das Rad entsprechend ausgerichtet ist, so daß die Welle in die entsprechende Felgenöffnung des Rades eintaucht. Anschließend wird das Rad in der Zentrierstellung auf der Welle 2 verspannt und in die in Fig. 9 dargestellte Meßstellung geschwenkt. Sodann kann der Meßlauf stattfinden.

## Patentansprüche

1. Auswuchtvorrichtung (1) mit einer eine Welle (2) zum Aufspannen eines Rades aufweisenden Auswuchtmaschine (3), mit einem Traggestell (4) und einer Auflage (5) oberhalb des Traggestells (4), wobei die Auswuchtmaschine (3) relativ zum Traggestell (4) aus einer horizontalen Stellung - Meßstellung - um 90° in eine obere Stellung - Zentrierstellung - verschwenkbar ist, **dadurch gekennzeichnet, daß** der Auswuchtmaschine (3) eine Höhenverstelleinrichtung (6) zugeordnet ist, um die Auswuchtmaschine (3) aus der Zentrierstellung so weit in das Traggestell (4) abzusenken, daß das äußere Ende (7) der Welle (2) nicht über die Auflage (5) übersteht.

2. Auswuchtvorrichtung nach Anspruch 1, **dadurch gekennzeichnet, daß** die vorzugsweise einen elektrischen, pneumatischen oder hydraulischen Verstellantrieb (14) aufweisende Höhenverstelleinrichtung (6) wenigstens einen an einer Führung (8) geführten Schlitten (9) aufweist, gegenüber dem die Auswuchtmaschine (3) schwenkbar gelagert ist.

3. Auswuchtvorrichtung nach Anspruch 1 oder 2, **dadurch gekennzeichnet, daß** die Höhenverstelleinrichtung (6) auf gegenüberliegenden Seiten jeweils eine Führung (8) mit einem Schlitten (9) aufweist und daß die Auswuchtmaschine (3) zwischen den Schlitten (9) insbesondere auf einer Traverse (12) angeordnet ist.

4. Auswuchtvorrichtung nach einem der vorhergehenden Ansprüche, **dadurch gekennzeichnet, daß** die Verschwenkung der Auswuchtmaschine (3) mit Hilfe einer Kurvenscheibe (15) und eines auf die Kurvenscheibe (15) wirkenden, federbelasteten Bolzens erfolgt, daß, vorzugsweise, in der Kurvenscheibe (15) Vertiefungen (17) in den jeweiligen Endstellungen vorgesehen sind, und daß, vorzugsweise, zur Schwenkwegbegrenzung Endanschläge vorgesehen sind.

5. Auswuchtvorrichtung nach einem der vorhergehenden Ansprüche, **dadurch gekennzeichnet, daß** der Auswuchtmaschine Abbremsmittel zur Verzögerung der Schwenkbewegung zugeordnet sind, und daß, vorzugsweise, die Abbremsmittel als doppelt-wirkende Zylinder ausgebildet sind.

6. Auswuchtvorrichtung nach einem der vorhergehenden Ansprüche, **dadurch gekennzeichnet, daß** die Höhenverstelleinrichtung (6) ein im Traggestell (4) schwenkbar gelagertes, mit der Auswuchtmaschine (3) verbundenes Hebelgetriebe (40) aufweist, mit dem bei Betätigung sowohl die Hubbewegung als auch die Schwenkbewegung der Auswuchtmaschine (3) durchführbar sind.

7. Auswucht- und Befüllstation (20) mit einer Auswuchtvorrichtung (1) nach einem der vorhergehenden Ansprüche, mit einer Luftversorgungseinrichtung und mit einem Befülltisch (22), wobei der Befülltisch (22) die Auflage (5) bildet oder in diese übergeht.

8. Auswucht- und Befüllstation nach Anspruch 7, **dadurch gekennzeichnet, daß** oberhalb des Befülltisches (22) ein auf den Befülltisch (22) aufsetzbarer oder aufgesetzter Sicherheitskäfig (24) vorgesehen ist.

9. Reifenwechselvorrichtung (21) mit einer Abdrückereinrichtung (28), einer Reifenwechseleinrichtung (29) und einer Auswucht- und Befüllstation (20) nach Anspruch 7 oder 8.

10. Verfahren zum Befüllen und Auswuchten eines Rades, wobei das Rad mit seiner nach unten geöffneten Felgenschüssel auf einen Befülltisch (22) einer Auswucht- und Befüllstation (20) aufgelegt wird, der Reifen auf dem Befülltisch (22) mit Luft bei einem vorgegebenen Druck gefüllt wird, das Rad anschließend auf dem Befülltisch (22) oder einer sich an den Befülltisch (22) unmittelbar anschließenden Auflage (5) der Auswucht- und Befüllstation (20) auf einer Welle (2) einer Auswuchtmaschine (3) der Auswucht- und Befüllstation (20) verspannt wird, wozu die Welle (2) mit der Auswuchtmaschine (3) aus einer vollständig versenkten Stellung nach oben in eine Zentrierstellung bewegt wird, und wobei die Auswuchtmaschine (3) mit dem auf der Welle (2) verspannten Rad anschließend um 90° in eine horizontale Stellung - Meßstellung - zur Durchführung eines Unwuchtmeßlaufes verschwenkt wird.

11. Auswuchtvorrichtung nach einem der Ansprüche 1-6, **dadurch gekennzeichnet, daß** die Auswuchtmaschine (3) in der Zentrierstellung und/oder der Meßstellung arretierbar, insbesondere verrastbar ist.

## Claims

1. A wheel balancing device (1) having a shaft (2) for clamping a wheel on a balancing machine (3) comprising a supporting frame (4) and a support (5) above said supporting frame (4), wherein said balancing machine (3) is pivotal 90° relative supporting frame (4) from a horizontal position - measurement position - to an upper position - central position,
**characterized in that**
a height adjusting means (6) is provided for said balancing machine (3) to lower the balancing machine (3) from the central position deep enough within supporting frame (4) that the outer end (7) of shaft (2) does not extend beyond support (5).

2. The wheel balancing device in accordance with claim 1,
**characterized in that**
height adjusting means (6) of preferably electric, pneumatic or hydraulic control drive (14) has at least one carriage (9) disposed on a guiding means (8) opposite of which the balancing machine (3) is pivotably mounted.

3. The wheel balancing device in accordance with claim 1 or 2,
**characterized in that**
height adjusting means (6) comprises a guiding means (8) for a carriage (9) on each opposite side and that the balancing machine (3) is preferably arranged between said carriages (9), particularly on a cross member (12).

4. The wheel balancing device in accordance with one of the preceding claims,
**characterized in that**
pivoting of balancing machine (3) ensues with the help of a cam plate (15) and a spring-loaded bolt acing upon said cam plate (15), that recesses (17) are preferably provided in said cam plate (15) at the respective end positions, and that end stoppers are preferably provided for limiting the swing distance.

5. The wheel balancing device in accordance with one of the preceding claims,
**characterized in that**
the balancing machine is disposed with braking means for decelerating the pivotal motion and that said braking means is preferably configured as a double-acting cylinder.

6. The wheel balancing device in accordance with one of the preceding claims,
**characterized in that**
height adjusting means (6) comprises a lever-driven worm gearbox (40) pivotably mounted in supporting frame (4) and coupled to balancing machine (3) for realizing both the hoisting motion as well as also the pivotal motion of balancing machine (3) during operation.

7. The wheel balancing and filling station (20) having a balancing device (1) according to one of the preceding claims comprising an air supplying device and a filling table (22), wherein said filling table (22) forms the support (5) or merges with same.

8. The wheel balancing and filling station in accordance with claim 7,
**characterized in that**
a safety cage (24) is provided above said filling table (22) which can be set down or positioned upon said filling table (22).

9. A tire changing device (21) comprising a bead breaking means (28), a tire changing means (29), and a wheel balancing and filling station (20) in accordance with claim 7 or 8.

10. A method for filling and balancing a wheel, wherein said wheel is positioned with its opened rim spanner in the downward-facing direction on a filing table (22) of a balancing and filling station (20), the tire on the filling table (22) is filled with air at a predefined pressure, the wheel is subsequently clamped on a shaft (2) of a balancing machine (3) of said balancing and filling station (20) on filing table (22) or on a support (5) directly adjoining said filling table (22) of said balancing and filling station (20), whereto shaft (2) with balancing machine (3) is moved upward from a fully submerged position to a central position, and wherein said balancing machine (3) with the wheel clamped on shaft (2) is subsequently pivoted by 90° into a horizontal position - measurement position - for the measuring of unbalanced status.

11. The wheel balancing device in accordance with one of claims 1-6,
**characterized in that**
said balancing machine (3) is lockable in the central and/or measurement position, preferably by means of latching.

## Revendications

1. Dispositif d'équilibrage (1) avec une machine d'équilibrage (3) possédant un arbre (2) pour le montage d'une roue, avec un cadre porteur (4) et un support (5) au dessus du cadre porteur (4), la machine à équilibrer (3) pouvant pivoter de façon relative au cadre porteur (4) à partir d'une position horizontale - position de mesure - de 90° en position haute - position de centrage,
**caractérisé en ce**
**qu'**une installation de déplacement vertical (6) est adjointe à la machine à équilibrer (3), afin d'abaisser aussi profondément, à partir de la position centrée, la machine à équilibrer (3) à l'intérieur du cadre porteur (4), que l'extrémité extérieure (7) de l'arbre (2) ne déborde pas du support (5).

2. Dispositif d'équilibrage selon la revendication 1,
**caractérisé en ce que**
de préférence une commande d'ajustage électrique (14), pneumatique ou hydraulique, disposant d'une installation de déplacement vertical (6), possède au moins un chariot (9) guidé sur un entraînement (8), contre lequel la machine d'équilibrage (3) est placée de façon pivotante.

3. Dispositif d'équilibrage selon la revendication 1 ou 2,
**caractérisé en ce que**
l'installation de déplacement vertical (6) possède respectivement sur les côtés opposés un entraînement (8) avec un chariot (9) et que la machine à équilibrer (3) est particulièrement installée sur une traverse (12) entre les chariots (9).

4. Dispositif d'équilibrage selon l'une des revendications précédentes,
**caractérisé en ce que**
le balayage horizontal de la machine à équilibrer (3) s'effectue à l'aide d'une came (15) et d'une goupille à ressort agissant sur la came (15), que des encoches (17) sont de préférence prévues aux niveaux des extrémités respectives de la came (15), et que des butées de fin de course sont de préférence prévues pour limiter la course de pivotement.

5. Dispositif d'équilibrage selon l'une des revendications précédentes,
**caractérisé en ce que**
la machine à équilibrer est pourvue de moyens de ralentissement pour retarder le mouvement de pivotement, et que les moyens de ralentissement sont conçus de préférence comme des cylindres à double effet.

6. Dispositif d'équilibrage selon l'une des revendications précédentes,
**caractérisée en ce que**
l'installation de déplacement vertical (6) possède dans le cadre porteur (4) un engrenage à levier (40) pivotant assemblé à la machine à équilibrer (3), grâce à l'actionnement duquel le mouvement de levage comme le mouvement de pivotement de la machine à équilibrer (3) sont réalisables.

7. Station d'équilibrage et de gonflage (20) avec un dispositif d'équilibrage (1) selon l'une des revendications précédentes, avec une installation d'alimentation en air et une table de gonflage (22), la table de gonflage (22) constituant le support (5) ou le devenant.

8. Station d'équilibrage et de gonflage selon la revendication 7,
**caractérisée en ce que**,
au dessus de la table de gonflage (22), une cage de sécurité (24) démontable ou rapportée est prévue sur la table de gonflage (22).

9. Organe de changement de pneus (21) avec une installation de poussage (28), une installation de changement de pneu (29) et une station d'équilibrage et de gonflage (20) selon la revendication 7 ou 8.

10. Procédé pour le gonflage et l'équilibrage d'une roue, la roue étant placée avec l'intérieur de sa jante orienté vers le bas sur la table de gonflage (22) d'une station d'équilibrage et de gonflage (20), le pneu étant rempli sur la table de gonflage (22) avec de l'air à une pression déterminée, la roue étant ensuite calée sur un arbre (2) d'une machine à équilibrer (3) de station d'équilibrage et de gonflage (20), sur la table de gonflage (22) ou sur un support (5) immédiatement attenant à la table de gonflage (22) de la station d'équilibrage et de gonflage (20), l'arbre (2) étant pour cela déplacé vers le haut, avec la machine à équilibrer (3) en position pivotante complète, en position de centrage, et la machine à équilibrer (3) étant ensuite amenée de 90° en position horizontale - position de mesurage - avec la roue calée sur l'arbre (2), en vue de réaliser la procédure d'équilibrage.

11. Dispositif d'équilibrage selon l'une des revendications 1 à 6,
**caractérisé en ce que**
la machine à équilibrer (3) est arrêtable en position centrée et/ou de la position de mesure, particulièrement enclenchable.
